# EUROPÄISCHE PATENTSCHRIFT

(11) **EP 1 393 251 B1**
(45) Veröffentlichungstag und Bekanntmachung des Hinweises auf die Patenterteilung: **16.08.2006**
(21) Anmeldenummer: 02766601.5
(22) Anmeldetag: 09.04.2002
(51) Int. Cl.: G06K 19/077

(54) **CHIPKARTENMODUL**
CHIP CARD MODULE
MODULE DE CARTE A PUCE

(30) Priorität: 25.04.2001 DE 10120254
(43) Veröffentlichungstag der Anmeldung: 03.03.2004
(73) Patentinhaber: Infineon Technologies AG, 81669 München (DE)
(72) Erfinder: GUNDLACH, Harald, 82031 Grünwald (DE)
(74) Vertreter: Epping - Hermann - Fischer
(86) Internationale Anmeldenummer: PCT/DE2002/001307
(87) Internationale Veröffentlichungsnummer: WO 2002/089050

(56) Entgegenhaltungen:
- EP-A- 0 347 897
- DE-A- 19 914 587
- DE-A- 19 933 757
- DE-C- 19 939 347
- FR-A- 2 734 383
- FR-A1- 2 722 315

## Beschreibung

Die vorliegende Erfindung betrifft ein Flex-Modul zum Einsatz in einen Kartenkörper für System-On-Card mit Bauteilen an der Oberfläche des Kartenkörpers.

Bei der Herstellung von Chipkarten ist es erforderlich, mehrere Bauelemente oder Komponenten eines System-On-Card an der Oberfläche eines biegsamen Trägers oder des Kartenkörpers einzusetzen. Die Bauelemente oder Komponenten sollen dabei einerseits bündig mit dem Träger oder der Oberfläche des Kartenkörpers abschließen. Andererseits darf auch die genormte Dicke der fertigen Chipkarte nicht überschritten werden.

Da die Funktionalität von Chipkarten durch das System-On-Card immer größer werden wird, besteht der Wunsch, eine Daten-Eingabemöglichkeit in der Chipkarte vorzusehen.

Bekannte Tastaturen, die im einfachsten Fall nur eine Taste besitzen, bestehen aus einer Deckfolie und einer Basisfolie. Zwischen der Deckfolie und der Basisfolie sind Schaltteile angeordnet, die in der Regel ebenfalls in einer Folie, der Schaltfolie, eingesetzt sind. Die aus dem Stand der Technik bekannten Tastaturen, die beispielsweise in Handys oder scheckkartengroßen Taschenrechnern eingesetzt werden, liegen als fertige Module mit von außen zugänglichen externen Kontakten vor. Das fertige Modul wird in das Gehäuse des Handys oder Taschenrechners eingesetzt, mit diesem mechanisch verbunden und über die elektrischen Kontakte mit den anderen Komponeten des Telefons oder Taschenrechners verbunden. Die Tastaturmoule sind allerdings zu dick, als daß sie in eine normierte Chipkarte, welche eine Dicke von ca. 700 µm aufweist, integriert werden könnten.

In den Dokumenten DE 199 14 587 A1 und EP 0 347 897 A1 ist die Anordnung einer Tastatur in einer Chipkarte vorgesehen.

Aus dem Dokument FR 2 734 383 ist ein kartenförmiges Gerät bekannt, auf dessen Zwischenschicht eine von außen zugängliche Tastatur aufgebracht ist. Die Zwischenschicht dient zugleich als Träger für eine im Gerät eingebaute Batterie.

Aus dem Dokument FR 2 722 315 ist eine Chipkarte mit einer Aussparung in einer Zwischenschicht beschrieben, in die eine von außen zugängliche Batterie eingebracht ist.

In dem Dokument FR 2 734 383 als nächstem Stand der Technik führt der Aufbau der Tastatur zu einer flachen Ausführung des kartenförmigen Geräts. Neben der Tastatur werden häufig weitere von außen zugängliche Eingabe- oder Anzeigeeinrichtungen verlangt. Zur Kostenreduktion sollte deren Montage in einfacher Weise möglich sein.

Aufgabe der vorliegenden Erfindung ist es, eine Tastatur und weitere von außen zugängliche Bauelemente für eine Chipkarte vorzusehen, die unter Berücksichtigung der Dicke einer normierten Chipkarte in einfacher Weise in diese integriert werden können.

Diese Aufgabe wird mit dem Chipkartenmodul mit den Merkmalen des Anspruchs 1 gelöst. Vorteilhafte Ausgestaltungen ergeben sich aus den abhängigen Ansprüchen.

Das erfindungsgemäße Chipkartenmodul umfaßt einen Zwischenträger, auf dem zumindest ein Bauelement angebracht ist. Der Zwischenträger ist nach dem Einsetzen in den Kartenkörper einer Chipkarte in dem Kartenkörper angeordnet, während das eine Bauelement oder zumindet eines der Bauelemente an der Oberfläche des Kartenkörpers gelegen ist und von daher von außen zugänglich ist. Dadurch, daß der Zwischenträger, der in System-On-Cards von Haus aus vorhanden ist, als ein funktionaler Bestandteil des Bauelementes verwendet wird, sind nunmehr Bauelemente in eine normierte Chipkarte integrierbar, welche ansonsten aufgrund ihrer üblichen Dicke nicht verwendet werden könnten.

Mit anderen Worten schlägt die Erfindung vor, den Zwischenträger als Ersatz für einen Bestandteil des Bauelementes zu verwenden, wodurch sich die Dicke des verbleibenden Bauelementes gegenüber dem ansonsten als Modul vorliegenden Bauelement verringern läßt.

Als Module vorliegende Bauelemente weisen immer ein Trägersubstrat auf, auf dem elektrische Komponenten aufgebracht sind. An dem Trägersubstrat sind dann regelmäßig externe Kontakte - entweder auf der Unterseite oder an dessen Stirnkante - angebracht, über welche das Bauelement elektrisch kontaktierbar ist.

Erfindungsgemäß kann auf dieses Trägersubstrat verzichtet werden, indem die elektrischen Komponenten des Bauelementes direkt mit dem Zwischenträger des Chipkartenmoduls kontaktiert werden. Ist das Bauelement gemäß einer vorteilhaften Weiterbildung der Erfindung eine Tastatur, die wenigstens eine Taste aufweist, so kann die das Trägersubstrat darstellende Basisfolie eingespart werden. Die Schaltfolie, die von einer an der Oberfläche des Kartenkörpers gelegenen Deckfolie bedeckt ist, kann direkt mit dem Zwischenträger kontaktiert werden.

Vorzugsweise weist der Zwischenträger deshalb eine Leiterzugstruktur auf, die zur Herstellung der elektrischen Verbindung mit dem zumindest einen Bauelement dient.

Vorteilhafterweise können auf diesem Zwischenträger weitere Bauelemente, z.B. ein Chipmodul oder eine Anzeigevorrichtung vorgesehen sein. Die elektrische Verbindung der Bauelemente untereinander gestaltet sich durch die Leiterzugstruktur afu dem Zwischenträger dann besonders einfach.

Durch den Verzicht auf die oben genannte Basisfolie reduziert sich die Dicke der Tastatur derart, daß ein Einbau in eine normierte Chipkarte möglich ist.

Die Erfindung läßt sich natürlich nicht nur bei Tastaturen, sondern bei allen Bauelementen verwenden, die überlicherweise als Modul vorliegen und ein Trägersubstrat mit externen Kontakten aufweisen. Bei all diesen Bauelementen ist ein Verzicht auf das Trägersubstrat mit einer einhergehenden Dickenreduzierung möglich, indem die jeweiligen elektrischen Komponenten direkt auf den Zwischenträger montiert werden.

In einem Träger oder Kartenkörper können natürlich auch weitere Zwischenträger mit jeweiligen Bauelementen angeordnet sein. Dabei muß auch nicht jeder der Zwischenträger in dem Träger oder Kartenkörper angebracht sein. Einer der weiteren Zwischenträger könnte gleichzeitig die Oberfläche der Chipkarte bilden, wobei Bauelemente in Löcher dieses Zwischenträgers eingesetzt oder mit diesem mechanisch verbunden sein können.

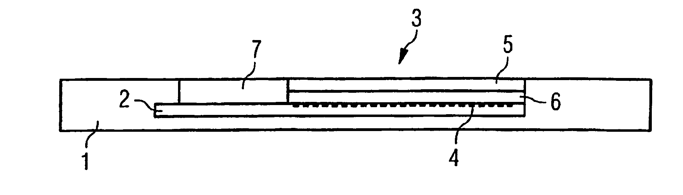

Ein mögliches Beispiel einer Ausführungsform des erfindungsgemäßen Chipmoduls mit einem Zwischenträger und einem darauf aufgebrachten Bauelement, bei dem der Zwischenträger einen funktionalen Bestandteil dieses Bauelementes bildet, ist in der beigefügten Figur im Querschnitt im Schema dargestellt.

In einen Kartenkörper 1 vorgegebener Größe ist ein Zwischenträger 2 eingesetzt. Auf diesem sind ein als fertiges Modul ausgebildetes Chipmodul 7 bekannter Bauweise und ein nicht als Modul vorliegendes Bauelement 3 in Form einer Tastatur aufgebracht. Sowohl das Chipmodul 7 als auch die Tastatur 3 schließen mit der Oberfläche des Kartenkörpers 1 bündig ab, so daß eine ebene Fläche entsteht. Die Tastatur besteht aus einer an der Oberfläche des Kartenkörpers gelegenen Deckschicht 5 und einer zwischen der Deckschicht 5 und dem Zwischenträger 2 befindlichen Schaltfolie 6. Die Schaltfolie 6 beinhaltet die elektrischen Komponenten der Tastatur, das heißt im wesentlichen die Tasten. Diese sind mit einer Leiterzugstruktur 4, die auf dem Zwischenträger 2 aufgebracht ist, elektrisch verbunden. Der Zwischenträger 2 mit der Leiterzugstruktur ersetzt folglich die bei einem Tastaturmodul übliche eingangs beschriebene Basisfolie mit den externen Kontakten. Der Zwischenträger 2 ist somit ein funktionaler Bestandteil der Tastatur 3 geworden. Hierdurch reduziert sich die Dicke der Tastatur derart, daß ein Einbau derselben in einen normierten Chipkartenkörper mit einer Dicke von ca. 700 µm möglich wird. Eine derartige Tastatur kann von bekannten Folientastaturen, wie sie zum Beispiel von Handys bekannt sind, abgeleitet werden.

Durch die Erfindung wird auch die Kontaktierung der Tastatur 3 mit den übrigen Bauelementen einer Chipkarte erleichtert.

Im vorliegenden Beispiel ist lediglich ein Chipmodul 7 dargestellt, welches ebenfalls auf dem Zwischenträger montiert ist und über die Leiterzugstruktur 4 mit der Tastatur auf einfache Weise elektrisch verbindbar ist. Die Erfindung ist selbstverständlich nicht darauf beschränkt, sondern kann eine Vielzahl weiterer Bauelemente, zum Beispiel eine Anzeigevorrichtung, einen Energiespeicher oder dergleichen, beinhalten.

Das Chipmodul kann dabei kontaktbehaftet oder kontaktlos oder hybrid ausgebildet sein.

### Bezugszeichenliste

- 1: Kartenkörper
- 2: Zwischenträger
- 3: Bauelement
- 4: Leiterzugstruktur
- 5: Deckfolie
- 6: Schaltfolie
- 7: Chipmodul

## Patentansprüche

1. Chipkarten-Modul, das zum Einsetzen in einen Kartenkörper bestimmt (1) ist, mit einem Zwischenträger (2), der funktioneller Bestandteil einer Chipkarten-Tastatur mit einer vom Zwischenträger (2) abgewandten Oberseite und Träger für zumindest ein weiteres Bauelement (3) mit einer vom Zwischenträger (2) abgewandten Oberseite ist, wobei die auf dem Zwischenträger (2) ausgebildeten Bauelemente und der Zwischenträger (2) als Modul ausgebildet sind, und wobei das Chipkarten-Modul **dadurch gekennzeichnet ist, daß** die Oberseite der Tastatur und die Oberseite des weiteren Bauelements (3) in einer Ebene liegen.

2. Chipkarten-Modul nach Anspruch 1, **dadurch gekennzeichnet, dass** der Zwischenträger (2) eine Leiterzugstruktur (4) aufweist, die zur Herstellung einer elektrischen Verbindung zwischen dem zumindest einen Bauelement (3) und der Chipkarten-Tastatur dient.

3. Chipkarten-Modul nach Anspruch 1 oder 2, **dadurch gekennzeichnet, dass** die Tastatur eine an der Oberfläche des Kartenkörpers gelegene Deckfolie (5) und eine mit dem Zwischenträger (2) kontaktierte Schaltfolie (6) aufweist.

4. Chipkarten-Modul nach einem der Ansprüche 1 bis 3 **dadurch gekennzeichnet, dass** eines der Bauelemente (3) ein Chipmodul (7) ist.

5. Chipkarte mit einem Chipkarten-Modul nach einem der Ansprüche 1 bis 4 mit zumindest einer Chipkarten-Tastatur.

6. Chipkarte nach Anspruch 5, wobei die Tastatur und das weitere Bauelement zugänglich sind.

## Claims

1. Smart card module intended for insertion into a card body (1), having an intermediate carrier (2), which is a functional constituent part of a smart card keypad having a top side remote from the intermediate carrier (2) and a carrier for at least one further component (3) having a top side remote from the intermediate carrier (2), the components formed on the intermediate carrier (2) and the intermediate carrier (2) are formed as a module, and the smart card module being **characterized in that** the top side of the keypad and the top side of the further component (3) lie in one plane.

2. Smart card module according to Claim 1, **characterized in that** the intermediate carrier (2) has a conductor track structure (4), which serves to produce an electrical connection between the at least one component (3) and the smart card keypad.

3. Smart card module according to Claim 1 or 2, **characterized in that** the keypad has a covering sheet (5) located at the surface of the card body and a switching sheet (6) contact-connected to the intermediate carrier (2).

4. Smart card module according to one of Claims 1 to 3, **characterized in that** one of the components (3) is a chip module (7) .

5. Smart card having a smart card module according to one of Claims 1 to 4 having at least one smart card keypad.

6. Smart card according to Claim 5, the keypad and the further component being accessible.

## Revendications

1. Module de carte à puce, qui est destiné (1) à être utilisé dans un corps de carte, comprenant un support (2) intermédiaire qui est un constituant fonctionnel d'un clavier de carte à puce ayant un côté supérieur éloigné du support (2) intermédiaire et un support pour au moins un autre composant (3) ayant un côté supérieur éloigné du support (2) intermédiaire, dans lequel les composants formés sur le support (2) intermédiaire et le support (2) intermédiaire sont constitués en module et dans lequel le module de carte à puce est **caractérisé en ce que** le côté supérieur du clavier et le côté supérieur de l'autre composant (3) sont dans un plan.

2. Module de carte à puce suivant la revendication 1, **caractérisé en ce que** le support (2) intermédiaire à une structure (4) de piste conductrice qui sert à produire une liaison électrique entre le au moins un composant (3) et le clavier de carte à puce.

3. Module de carte à puce suivant la revendication 1 ou 2, **caractérisé en ce que** le clavier a une feuille (5) de finition posée à la surface du corps de carte et a une feuille (6) de circuit en contact avec le support (2) intermédiaire.

4. Module de carte à puce suivant l'une des revendications 1 à 3, **caractérisé en ce que** l'un des composants (3) est un module (7) de puce.

5. Carte à puce ayant un module de carte à puce suivant l'une des revendications 1 à 4 ayant au moins un clavier de carte à puce.

6. Carte à puce suivant la revendication 5, dans laquelle le clavier et l'autre composant sont accessibles.
